# EUROPEAN PATENT APPLICATION

(11) **EP 4 741 996 A1**
(43) Date of publication of application: **13.05.2026**
(21) Application number: 25212455.7
(22) Date of filing: 30.10.2025
(51) Int. Cl.: G06F 1/20, G06F 1/3206, G06N 3/08, G06N 20/00, H04L 43/08, H05K 7/20, G06F 1/3203, G06F 11/32

(54) **MACHINE LEARNING OF RELATIONSHIP BETWEEN AMBIENT AIR TEMPERATURE AND POWER CONSUMPTION**

(30) Priority: 08.11.2024 IN 202441085971; 26.09.2025 US 202519341916
(71) Applicant: Juniper Networks, Inc., Sunnyvale, CA 94089-1206 (US)
(72) Inventor: KOMMULA, Raja, Sunnyvale, CA 94089 (US); SUNKADA, Ganesh Byagoti Matad, Sunnyvale, CA 94089 (US); SRIDHAR, Thayumanavan, Sunnyvale, CA 94089 (US); YAVATKAR, Rajendra Shivaram, Sunnyvale, CA 94089 (US)
(74) Representative: D Young & Co LLP

(57) **Abstract**

Example devices and techniques are described. An example device includes one or more processors and one or more memories storing instructions. When executed, the instructions cause the one or more processors to determine a respective configured ambient temperature for each of a plurality of network devices. The instructions cause the one or more processors to determine a respective current traffic load on each of the plurality of network devices. The instructions cause the one or more processors to determine, for each of the plurality of network devices and based on the respective configured ambient temperatures and the respective current traffic loads, a respective estimated power usage value. The instructions cause the one or more processors to sum the respective estimated power usage values to generate an overall estimated power usage value and output a representation of the overall estimated power usage value.

## Description

This application claims the benefit of US Patent Application No. 19/341,916, filed 26 September 2025, and entitled "MACHINE LEARNING OF RELATIONSHIP BETWEEN AMBIENT AIR TEMPERATURE AND POWER CONSUMPTION," which claims the benefit of IN Provisional Patent Application No. 202441085971, filed 8 November 2024, and entitled "MACHINE LEARNING OF RELATIONSHIP BETWEEN AMBIENT AIR TEMPERATURE AND POWER CONSUMPTION," the entire content of each application is incorporated herein by reference.

### TECHNICAL FIELD

This disclosure relates to computer network facilities that use power.

### BACKGROUND

In a typical cloud data center environment, there is a large collection of interconnected servers that provide computing and/or storage capacity to run various applications. For example, a data center may comprise a facility that hosts applications and services for subscribers, e.g., customers of the data center. The data center may, for example, host all of the infrastructure equipment, such as networking and storage systems, redundant power supplies, and environmental controls. In a typical data center, clusters of storage servers and application servers (compute nodes) are interconnected via high-speed switch fabric provided by one or more tiers of physical network switches and routers. More sophisticated data centers provide infrastructure spread throughout the world with subscriber support equipment located in various physical hosting facilities.

As data centers become larger, energy usage by the data centers increases. Some large data centers require a significant amount of power (e.g., around 100 megawatts), which is enough to power a large number of homes (e.g., around 80,000). Data centers may also run application workloads that are compute and data intensive, such as crypto mining and machine learning applications, that consume a significant amount of energy. As energy use has risen, customers of data centers and data center providers themselves have become more concerned about efficient use of power.

### SUMMARY

Particular aspects are set out in the appended independent claims. Various optional embodiments are set out in the dependent claims. In general, techniques are described for power management of network devices. In particular techniques are described for determining recommended chassis ambient temperatures (e.g., recommended maximum operating temperatures) for network devices and for ambient temperature-based power estimation using machine learning. Network devices generally have a maximum operating temperature that can be set by a network administrator, which may sometimes be referred to as an ambient temperature. The maximum fan speed may be determined by this configured ambient temperature. As fan speed increases, the device's power consumption also rises. When temperatures are higher, the device generally consumes more power because the fans must run at higher speeds to keep the chassis temperature within the set limits (e.g., under the maximum operating temperature).

Conventionally, an administrator may monitor the external weather temperature and adjust the network devices' ambient temperature accordingly. If the administrator forgets or neglects to configure the ambient temperature based on external conditions, a conventional network may waste power. This is particularly noticeable when the external temperature is significantly lower than a currently configured ambient temperature.

Also, because the power consumption of network devices and the overall network is influenced by ambient temperature, network administrators often struggle to allocate the appropriate amount of power without knowing the power requirements associated with different ambient settings. Conventionally, network administrators may typically rely on external weather conditions to determine an appropriate ambient temperature for each network device in a network configuration. However, once the network administrator establishes such an ambient temperature value, the network administrator may remain uncertain about how this configuration will impact power consumption. This uncertainty can lead to either over-subscribing or under-subscribing power at the power grids, resulting in wasted energy and increased costs or, conversely, power shortages in conventional networks.

The techniques of this disclosure may determine recommended ambient temperatures for network devices and/or may estimate power requirements in relation to current traffic load based on the ambient temperature(s). The techniques of the disclosure may therefore provide specific improvements to the computer-related field of computer network and data center power management that may have one or more practical applications. For example, such techniques may result in the saving of power over conventional data centers' power facilities by reducing ambient temperatures and thereby reducing fan speed of devices when cool air feeding a data center or other network facility is of a lower temperature. Such techniques may also result in the saving of power (the reduction of power waste) and/or the reduction of black out(s) or brown out(s) at a data center or other network facility by enabling a more accurate prediction of actual power needs of the data center or other network facility. Accordingly, network devices of a data center or facility employing the techniques of the disclosure may be more energy efficient and consume less power over conventional network devices.

In one example, this disclosure describes a computing device including one or more processors; and one or more memories storing instructions, which, when executed by the one or more processors, cause the one or more processors to: determine a respective configured ambient temperature for each of a plurality of network devices; determine a respective current traffic load on each of the plurality of network devices; determine, for each of the plurality of network devices and based on the respective configured ambient temperatures and the respective current traffic loads, a respective estimated power usage value; generate an overall estimated power usage value based at least in part on the respective estimated power usage values; and output a representation of the overall estimated power usage value.

In another example, this disclosure describes a method including: determining, by one or more processors, a respective configured ambient temperature for each of a plurality of network devices; determining, by the one or more processors, a respective current traffic load on each of the plurality of network devices; determining, by the one or more processors, for each of the plurality of network devices and based on the respective configured ambient temperatures and the respective current traffic loads, a respective estimated power usage value; generating, by the one or more processors, an overall estimated power usage value based at least in part on the respective estimated power usage values; and outputting, by the one or more processors and to an output device, a representation of the overall estimated power usage value.

In another example, this disclosure describes computer-readable media storing instructions which, when executed, cause one or more processors to: determine a respective configured ambient temperature for each of a plurality of network devices; determine a respective current traffic load on each of the plurality of network devices; determine, for each of the plurality of network devices and based on the respective configured ambient temperatures and the respective current traffic loads, a respective estimated power usage value; generate an overall estimated power usage value based at least in part on the respective estimated power usage values; and output a representation of the overall estimated power usage value..

The details of one or more examples of this disclosure are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example network system having computing infrastructure in which examples of the techniques described herein may be implemented.
FIG. 2 is a block diagram illustrating an example computing device according to techniques described herein.
FIG. 3 is a block diagram of an example data center.
FIG. 4 is a block diagram of an example system for determining recommended chassis ambient temperatures according to one or more aspects of this disclosure.
FIG. 5 is a block diagram illustrating inputs and output for a machine learning model according to one or more aspects of this disclosure.
FIG. 6 is a flow diagram illustrating an example operation for generating recommended chassis ambient temperatures according to one or more aspects of this disclosure.
FIG. 7 is a conceptual diagram illustrating example power usage of a rack of network devices over time as related to ambient temperature.
FIG. 8 is a conceptual diagram illustrating example power usage of a rack of network devices over time as related to ambient temperature according to one or more aspects of this disclosure.
FIGS. 9A-9B are flow diagrams illustrating an example operation for estimating ambient temperature-based power consumption using machine learning techniques according to one or more aspects of this disclosure.
FIG. 10 is a flow diagram illustrating an example operation for estimating ambient temperature according to one or more aspects of this disclosure.
FIG. 11 is a flow diagram illustrating an example operation for estimating network power consumption according to one or more aspects of this disclosure.

Like reference characters denote like elements throughout the description and figures.

### DETAILED DESCRIPTION

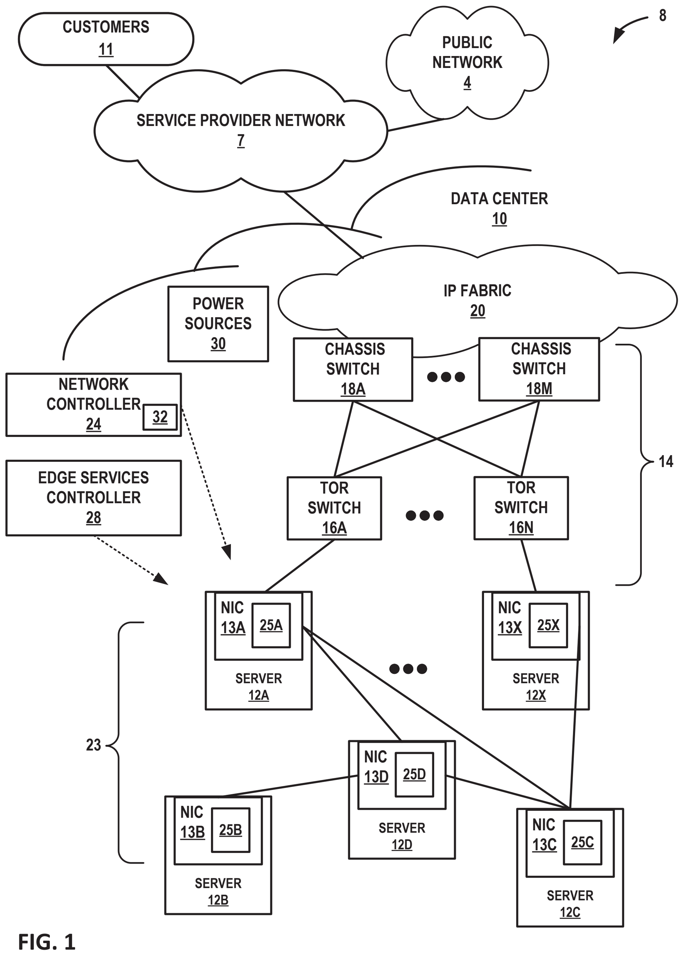

FIG. 1 is a block diagram illustrating an example network system 8 having computing infrastructure in which the techniques described herein may be implemented. In general, data center 10 provides an operating environment for applications and services for one or more customer sites 11 (illustrated as "customers 11") having one or more customer networks coupled to the data center by service provider network 7. Data center 10 may, for example, host infrastructure equipment, such as networking and storage systems, redundant power supplies, and environmental controls. Service provider network 7 is coupled to public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 4. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers interconnected via switch fabric 14 provided by one or more tiers of physical network switches and routers, with servers 12A-12X (herein, "servers 12") depicted as coupled to top-of-rack (TOR) switches 16A-16N. Servers 12 may also be referred to herein as "hosts" or "host devices." Data center 10 may include many additional servers coupled to other TOR switches 16 of the data center 10. Servers 12 and TOR switches 16 may be deployed within a plurality of racks (not shown in FIG. 1).

Switch fabric 14 in the illustrated example includes interconnected top-of-rack (or other "leaf") switches 16A-16N (collectively, "TOR switches 16") coupled to a distribution layer of chassis (or "spine" or "core") switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices.

In this example, TOR switches 16 and chassis switches 18 provide servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for a Network Function Virtualization (NFV) architecture.

Servers 12 host endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

In some examples, servers 12 each may include at least one network interface card (NIC) of NICs 13A-13X (collectively, "NICs 13"), which each include at least one port with which to exchange packets send and receive packets over a communication link. For example, server 12A includes NIC 13A. NICs 13 provide connectivity between the server and the switch fabric. In some examples, NIC 13 includes an additional processing unit in the NIC itself to offload at least some of the processing from the host CPU (e.g., the CPU of the server that includes the NIC) to the NIC, such as for performing policing and other advanced functionality, known as the "datapath."

In some examples, each of NICs 13 provides one or more virtual hardware components for virtualized input/output (I/O). A virtual hardware component for I/O may be a virtualization of a physical NIC 13 (the "physical function"). For example, in Single Root I/O Virtualization (SR-IOV), which is described in the Peripheral Component Interface Special Interest Group SR-IOV specification, the PCIe Physical Function of the network interface card (or "network adapter") is virtualized to present one or more virtual network interface cards as "virtual functions" for use by respective endpoints executing on the server 12. In this way, the virtual network endpoints may share the same PCIe physical hardware resources and the virtual functions are examples of virtual hardware components. As another example, one or more servers 12 may implement Virtio, a para-virtualization framework available, e.g., for the Linux Operating System, that provides emulated NIC functionality as a type of virtual hardware component. As another example, one or more servers 12 may implement Open vSwitch to perform distributed virtual multilayer switching between one or more virtual NICs (vNICs) for hosted virtual machines, where such vNICs may also represent a type of virtual hardware component. In some instances, the virtual hardware components are virtual I/O (e.g., NIC) components. In some instances, the virtual hardware components are SR-IOV virtual functions and may provide SR-IOV with Data Plane Development Kit (DPDK)-based direct process user space access.

In some examples, including the illustrated example of FIG. 1, one or more of NICs 13 may include multiple ports. NICs 13 may be connected to one another via ports of NICs 13 and communications links to form a NIC fabric 23 having a NIC fabric topology. NIC fabric 23 is the collection of NICs 13 connected to at least one other NIC 13.

In some examples, NICs 13 each include a processing unit to offload aspects of the datapath. The processing unit in the NIC may be, e.g., a multi-core ARM processor with hardware acceleration provided by a Data Processing Unit (DPU), Field Programmable Gate Array (FPGA), and/or an ASIC. NICs 13 may alternatively be referred to as SmartNICs or GeniusNICs.

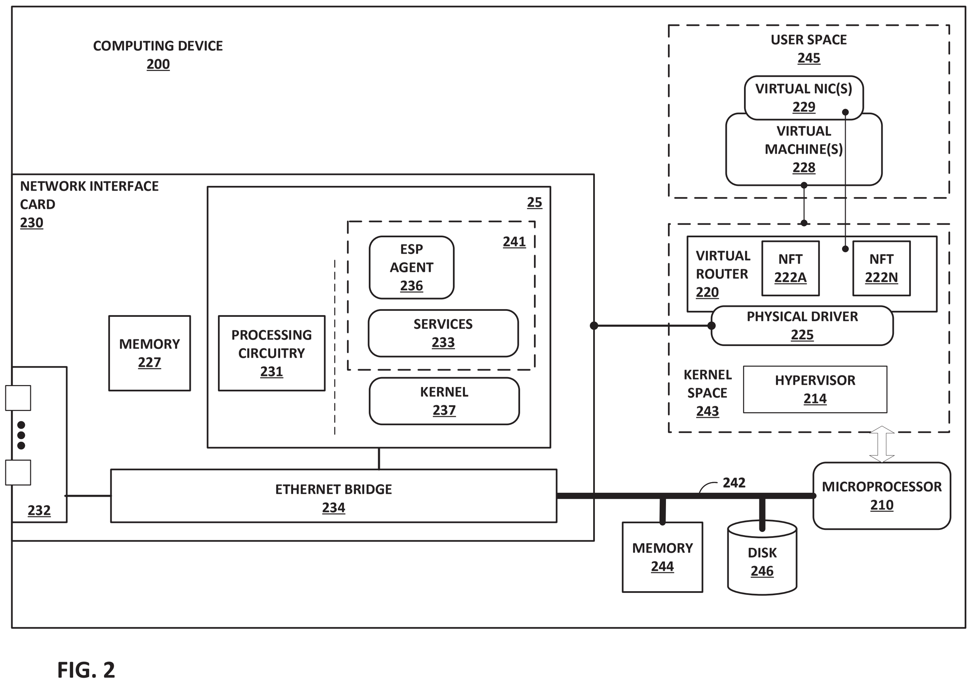

Edge services controller 28 may manage the operations of the edge services platform within NIC 13s in part by orchestrating services (e.g., services 233 as shown in FIG. 2) to be performed by processing units 25; application programming interface (API) driven deployment of services 233 on NICs 13; NIC 13 addition, deletion and replacement within the edge services platform; monitoring of services 233 and other resources on NICs 13; and management of connectivity between various services 233 running on the NICs 13.

Edge services controller 28 may communicate information describing services available on NICs 13, a topology of NIC fabric 13, or other information about the edge services platform to an orchestration system (not shown) or network controller 24. Example orchestration systems include OpenStack, vCenter by VMWARE, or System Center by MICROSOFT. Example network controllers 24 include a controller for Contrail by JUNIPER NETWORKS or Tungsten Fabric. Additional information regarding a controller 24 operating in conjunction with other devices of data center 10 or other software-defined network is found in International Application Number PCT/US2013/044378, filed June 5, 2013, and entitled "PHYSICAL PATH DETERMINATION FOR VIRTUAL NETWORK PACKET FLOWS;" and in U.S. Patent 9,571,394, issued February 14, 2017, and entitled "TUNNELED PACKET AGGREGATION FOR VIRTUAL NETWORKS," each of which is incorporated by reference as if fully set forth herein.

In some examples, network controller 24 may determine, based on an air temperature, an estimated (e.g., predicted) ambient temperature of a network device (e.g., any of servers 12, TOR switches 16, chassis switches 18). The ambient temperature of the network device may be a maximum operating temperature which may be configured such as to affect the fan speed of the network device. Network controller 24 may output a representation of the estimated ambient temperature of the network device. For example, network controller 24 may output an estimated ambient temperature via a user interface as a recommendation for an administrator to apply to the network device and/or may output a command to the network device to reconfigure the ambient temperature of the network device to equal the estimated ambient temperature.

In some examples, network controller 24 may determine a respective configured ambient temperature for each of a plurality of network devices, the plurality of network devices being associated with a facility (e.g., data center 10). Network controller 24 may determine a current traffic load on the plurality of network devices. Network controller 24 may determine, based on the respective configured ambient temperatures and the current traffic load, an estimated power usage. Network controller 24 may output a representation of the estimated power usage to an output device, such as a display device, audio device, or other type of user feedback device.

Centralized chassis thermal controller 32, which may be implemented in network controller 24, may recommend and/or control ambient temperatures of network devices within data center 10. Centralized chassis thermal controller 32 may estimate a power usage for data center 10 of the network devices within data center 10 based on configured ambient temperatures and current traffic load. In some examples, centralized chassis thermal controller 32 may include one or more machine learning models configured to perform any of the techniques of this disclosure.

In the example of FIG. 1, data center 10 may obtain energy from one or more power sources 30 for data center 10. While shown inside data center 10, it should be understood that power generating equipment (e.g., power plant, solar panels, wind turbines, etc.) for power sources 30 may be located outside of data center 10.

FIG. 2 is a block diagram illustrating an example computing device according to techniques described herein. Computing device 200 of FIG. 2 may represent network controller 24, edge services controller 28, or may represent an example instance of any of servers 12 of FIG. 1. Computing device 200 includes in this example, a bus 242 coupling hardware components of a computing device 200 hardware environment. Bus 242 couples SR-IOV-capable NIC 230, storage disk 246, and microprocessor 210. A front-side bus may in some cases couple microprocessor 210 and memory device 244. In some examples, bus 242 may couple memory device 244, microprocessor 210, and NIC 230. Bus 242 may represent a Peripheral Component Interface (PCI) express (PCIe) bus. In some examples, a direct memory access (DMA) controller may control DMA transfers among components coupled to bus 242. In some examples, components coupled to bus 242 control DMA transfers among components coupled to bus 242.

Microprocessor 210 may include one or more processors each including an independent execution unit ("processing core") to perform instructions that conform to an instruction set architecture. Execution units may be implemented as separate integrated circuits (ICs) or may be combined within one or more multi-core processors (or "many-core" processors) that are each implemented using a single IC (i.e., a chip multiprocessor).

Disk 246 represents computer readable storage media that includes volatile and/or non-volatile, removable and/or non-removable media implemented in any method or technology for storage of information such as processor-readable instructions, data structures, program modules, or other data. Computer readable storage media includes, but is not limited to, random access memory (RAM), read-only memory (ROM), EEPROM, flash memory, CD-ROM, digital versatile discs (DVD) or other optical storage, magnetic cassettes, magnetic tape, magnetic disk storage or other magnetic storage devices, or any other medium that can be used to store the desired information and that can be accessed by microprocessor 210.

Memory device 244 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Main memory 244 provides a physical address space composed of addressable memory locations.

Network interface card (NIC) 230 includes one or more interfaces 232 configured to exchange packets using links of an underlying physical network. Interfaces 232 may include a port interface card having one or more network ports. NIC 230 also include an on-card memory 227 to, e.g., store packet data. Direct memory access transfers between the NIC 230 and other devices coupled to bus 242 may read/write from/to the memory 227.

Memory device 244, NIC 230, storage disk 246, and microprocessor 210 provide an operating environment for a software stack that executes a hypervisor 214 and one or more virtual machines 228 managed by hypervisor 214.

In general, a virtual machine provides a virtualized/guest operating system for executing applications in an isolated virtual environment. Because a virtual machine is virtualized from physical hardware of the host server, executing applications are isolated from both the hardware of the host and other virtual machines.

An alternative to virtual machines is the virtualized container, such as those provided by the open-source DOCKER Container application. Like a virtual machine, each container is virtualized and may remain isolated from the host machine and other containers. However, unlike a virtual machine, each container may omit an individual operating system and provide only an application suite and application-specific libraries. A container is executed by the host machine as an isolated user-space instance and may share an operating system and common libraries with other containers executing on the host machine. Thus, containers may require less processing power, storage, and network resources than virtual machines. As used herein, containers may also be referred to as virtualization engines, virtual private servers, silos, or jails. In some instances, the techniques described herein with respect to containers and virtual machines or other virtualization components.

While virtual network endpoints in FIG. 2 are illustrated and described with respect to virtual machines, other operating environments, such as containers (e.g., a DOCKER container) may implement virtual network endpoints. An operating system kernel (not shown in FIG. 2) may execute in kernel space 243 and may include, for example, a Linux, Berkeley Software Distribution (BSD), another Unix-variant kernel, or a Windows server operating system kernel, available from MICROSOFT.

Computing device 200 executes a hypervisor 214 to manage virtual machines 228 of user space 245. Example hypervisors include Kernel-based Virtual Machine (KVM) for the Linux kernel, Xen, ESXi available from VMWARE, Windows Hyper-V available from MICROSOFT, and other open-source and proprietary hypervisors. Hypervisor 214 may represent a virtual machine manager (VMM).

Virtual machines 228 may host one or more applications, such as virtual network function instances. In some examples, a virtual machine 228 may host one or more VNF instances, where each of the VNF instances is configured to apply a network function to packets.

Hypervisor 214 includes a physical driver 225 to use the physical function 221 provided by network interface card 230. In some cases, network interface card 230 may also implement SR-IOV to enable sharing the physical network function (I/O) among virtual machines. Each port of NIC 230 may be associated with a different physical function. The shared virtual devices, also known as virtual functions, provide dedicated resources such that each of virtual machines 228 (and corresponding guest operating systems) may access dedicated resources of NIC 230, which therefore appears to each of the virtual machines as a dedicated NIC. Virtual functions may represent lightweight PCIe functions that share physical resources with the physical function and with other virtual functions. NIC 230 may have thousands of available virtual functions according to the SR-IOV standard, but for I/O-intensive applications the number of configured virtual functions is typically much smaller.

Virtual machines 228 include respective virtual NICs 229 presented directly into the virtual machine 228 guest operating system, thereby offering direct communication between NIC 230 and the virtual machine 228 via bus 242, using the virtual function assigned for the virtual machine. This may reduce hypervisor 214 overhead involved with software-based, VIRTIO and/or vSwitch implementations in which hypervisor 214 memory address space of memory device 244 stores packet data and packet data copying from the NIC 230 to the hypervisor 214 memory address space and from the hypervisor 214 memory address space to the virtual machines 228 memory address space consumes cycles of microprocessor 210.

NIC 230 may further include a hardware-based Ethernet bridge 234 (which may include an embedded switch). Ethernet bridge 234 may perform layer 2 forwarding between virtual functions and physical functions of NIC 230. Ethernet bridge 234 thus in some cases provides hardware acceleration, via bus 242, of inter-virtual machine packet forwarding and of packet forwarding between hypervisor 214, which accesses the physical function via physical driver 225, and any of the virtual machines. Ethernet bridge 234 may be physically separate from processing unit 25.

Computing device 200 may be coupled to a physical network switch fabric that includes an overlay network that extends switch fabric from physical switches to software or "virtual" routers of physical servers coupled to the switch fabric, including virtual router 220. Virtual routers may be processes or threads, or a component thereof, executed by the physical servers, e.g., servers 12 of FIG. 1, that dynamically create and manage one or more virtual networks usable for communication between virtual network endpoints. In one example, virtual routers implement each virtual network using an overlay network, which provides the capability to decouple an endpoint's virtual address from a physical address (e.g., IP address) of the server on which the endpoint is executing. Each virtual network may use its own addressing and security scheme and may be viewed as orthogonal from the physical network and its addressing scheme. Various techniques may be used to transport packets within and across virtual networks over the physical network. At least some functions of virtual router may be performed as one of services 233.

In the example computing device 200 of FIG. 2, virtual router 220 executes within hypervisor 214 that uses physical function 221 for I/O, but virtual router 220 may execute within a hypervisor, a host operating system, a host application, one of virtual machines 228, and/or processing unit 25 of NIC 230.

In general, each virtual machine 228 may be assigned a virtual address for use within a corresponding virtual network, where each of the virtual networks may be associated with a different virtual subnet provided by virtual router 220. A virtual machine 228 may be assigned its own virtual layer three (L3) IP address, for example, for sending and receiving communications but may be unaware of an IP address of the computing device 200 on which the virtual machine is executing. In this way, a "virtual address" is an address for an application that differs from the logical address for the underlying, physical computer system, e.g., computing device 200.

In one implementation, computing device 200 includes a virtual network (VN) agent (not shown) that controls the overlay of virtual networks for computing device 200 and that coordinates the routing of data packets within computing device 200. In general, a VN agent communicates with a virtual network controller for the multiple virtual networks, which generates commands to control routing of packets. A VN agent may operate as a proxy for control plane messages between virtual machines 228 and virtual network controller, such as controller 24. For example, a virtual machine may request to send a message using its virtual address via the VN agent, and VN agent may in turn send the message and request that a response to the message be received for the virtual address of the virtual machine that originated the first message. In some cases, a virtual machine 228 may invoke a procedure or function call presented by an application programming interface of VN agent, and the VN agent may handle encapsulation of the message as well, including addressing.

In one example, network packets, e.g., layer three (L3) IP packets or layer two (L2) Ethernet packets generated or consumed by the instances of applications executed by virtual machine 228 within the virtual network domain may be encapsulated in another packet (e.g., another IP or Ethernet packet) that is transported by the physical network. The packet transported in a virtual network may be referred to herein as an "inner packet" while the physical network packet may be referred to herein as an "outer packet" or a "tunnel packet." Encapsulation and/or de-capsulation of virtual network packets within physical network packets may be performed by virtual router 220. This functionality is referred to herein as tunneling and may be used to create one or more overlay networks. Besides IPinIP, other example tunneling protocols that may be used include IP over Generic Route Encapsulation (GRE), VxLAN, Multiprotocol Label Switching (MPLS) over GRE, MPLS over User Datagram Protocol (UDP), etc.

As noted above, a virtual network controller may provide a logically centralized controller for facilitating operation of one or more virtual networks. The virtual network controller may, for example, maintain a routing information base, e.g., one or more routing tables that store routing information for the physical network as well as one or more overlay networks. Virtual router 220 of hypervisor 214 implements a network forwarding table (NFT) 222A-222N for N virtual networks for which virtual router 220 operates as a tunnel endpoint. In general, each NFT 222 stores forwarding information for the corresponding virtual network and identifies where data packets are to be forwarded and whether the packets are to be encapsulated in a tunneling protocol, such as with a tunnel header that may include one or more headers for different layers of the virtual network protocol stack. Each of NFTs 222 may be an NFT for a different routing instance (not shown) implemented by virtual router 220.

An edge services platform leverages processing unit 25 of NIC 230 to augment the processing and networking functionality of computing device 200. Processing unit 25 includes processing circuitry 231 to execute services orchestrated by edge services controller 28. Processing circuitry 231 may represent any combination of processing cores, ASICs, FPGAs, or other integrated circuits and programmable hardware. In an example, processing circuity may include a System-on-Chip (SoC) having, e.g., one more cores, a network interface for high-speed packet processing, one or more acceleration engines for specialized functions (e.g., security/cryptography, machine learning, storage), programmable logic, integrated circuits, and so forth. Such SoCs may be referred to as data processing units (DPUs). DPUs may be examples of processing unit 25.

In the example NIC 230, processing unit 25 executes an operating system kernel 237 and a user space 241 for services. Kernel may be a Linux kernel, a Unix or BSD kernel, a real-time operating system (OS) kernel, or other kernel for managing hardware resources of processing unit 25 and managing user space 241.

Services 233 may include network, security, storage, data processing, co-processing, machine learning or other services, such as ambient air temperature and/or power consumption services, in accordance with techniques described in this disclosure. Processing unit 25 may execute services 233 and edge service platform (ESP) agent 236 as processes and/or within virtual execution elements such as containers or virtual machines. As described elsewhere herein, services 233 may augment the processing power of the host processors (e.g., microprocessor 210) by, e.g., enabling the computing device 200 to offload packet processing, security, or other operations that would otherwise be executed by the host processors.

Processing unit 25 executes edge service platform (ESP) agent 236 to exchange data and control data with an edge services controller for the edge service platform. While shown in user space 241, ESP agent 236 may be a kernel module 237 in some instances.

As an example, ESP agent 236 may collect and send, to the ESP controller, telemetry data generated by services 233, the telemetry data describing traffic in the network (e.g., traffic load), computing device 200 or network resource availability, resource availability of resources of processing unit 25 (such as memory or core utilization), and/or resource energy usage. As another example, ESP agent 236 may receive, from the ESP controller, service code to execute any of services 233, service configuration to configure any of services 233, packets or other data for injection into the network.

Edge services controller 28 manages the operations of processing unit 25 by, e.g., orchestrating and configuring services 233 that are executed by processing unit 25; deploying services 233; NIC 230 addition, deletion and replacement within the edge services platform; monitoring of services 233 and other resources on NIC 230; and management of connectivity between various services 233 running on NIC 230. Example resources on NIC 230 include memory 227 and processing circuitry 231. In some examples, edge services controller 28 may perform any of the techniques attributed to network controller 24 herein.

A chassis ambient temperature recommender is now discussed.

Network devices generally have a maximum operating temperature that can be set by a network administrator, referred to as the ambient temperature. The maximum fan speed may be determined and/or affected by this configured temperature. As fan speed increases, the device's power consumption also rises. When temperatures are higher, the device generally consumes more power because the fans must run at higher speeds to keep the chassis temperature within the set limits (e.g., under the maximum operating temperature).

The administrator may monitor the external weather temperature and adjust the devices' ambient temperature accordingly. If the administrator forgets or neglects to configure the ambient temperature based on external conditions, the network may waste power. This is particularly noticeable when the external temperature is significantly lower than the currently configured ambient temperature.

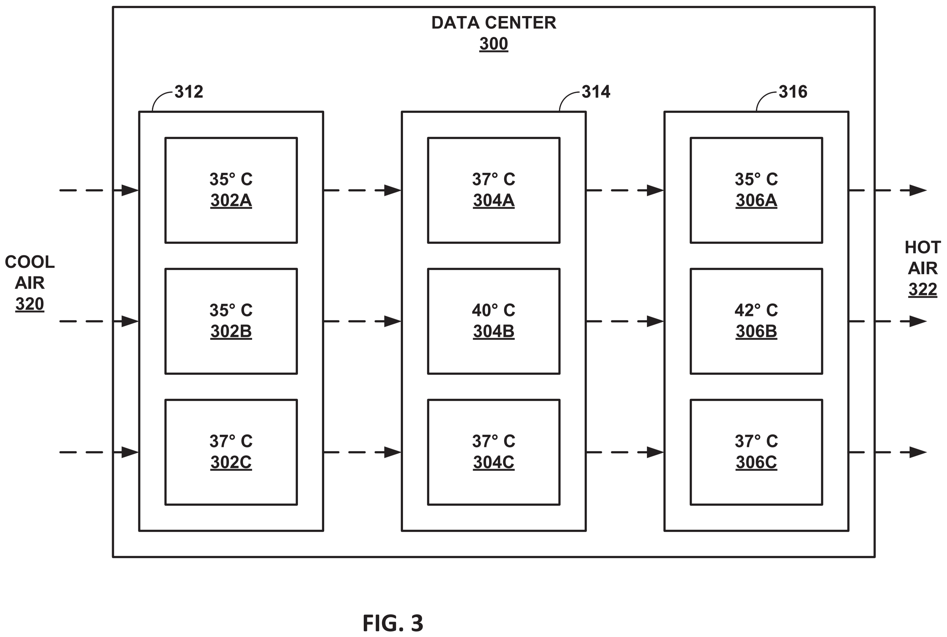

FIG. 3 is a block diagram of an example data center. As illustrated in FIG. 3, data center 300 include rack 312 including computing devices 302A-302C (collectively "computing devices 302"), rack 314 including computing devices 304A-304C (collectively "computing devices 304"), and rack 314 including computing devices 306A-306C (collectively "computing devices 306"). Each of computing devices 302, 304, and 306, may have different (or the same) ambient temperatures. For example, cool air 320 may enter data center 300 near rack 312 and hot air 322 may exit data center 300 near rack 316. Air may flow through racks 312, 314, and 316 as the originally cool air 320 is warmed by the computing devices in racks 312, 314, and 316. Thus, the air temperature at computing devices 306 may likely be higher than at computing devices 302.

In the example of FIG. 3, example ambient temperatures of each computing device are shown. These ambient temperatures may be manually set and may not adapt to changes in external conditions. As such, the set ambient temperatures may be non-optimal. In some examples, a device administrator may determine the ambient temperature for each of computing devices 302, 304, and 306, based on external weather conditions, and may configure the ambient temperature for each of computing devices 302, 304, and 306 taking into account the thermal characteristics of each particular device.

Such a practice is time consuming, subject to human error including forgetfulness, and not practical or particularly useful when dealing with sudden external temperature changes, such as due to storms, climate change, etc.

In accordance with the techniques of this disclosure, a network controller may automatically determine, and set or recommend, the ambient temperature (e.g., for any of, any combination or, or all of computing devices 302A-302N) based on the inlet air temperature of the computing devices. By utilizing the inlet temperature sensors on the computing device chassis, the techniques of this disclosure estimate or calculate the ambient temperature.

In a data center, where devices are located in different racks, air temperature can vary depending on the rack's location. The techniques of this disclosure may include analyzing historical inlet temperature data and the configured ambient temperatures of a plurality (e.g., all) of computing devices to derive or learn the optimal ambient temperature for each such computing device.

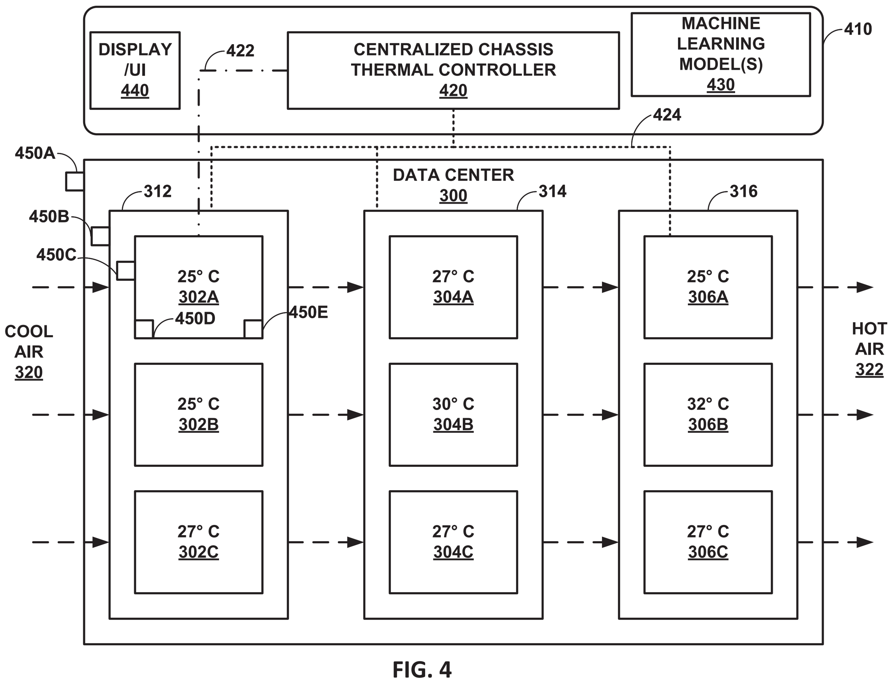

FIG. 4 is a block diagram of an example system for determining recommended chassis ambient temperatures according to one or more aspects of this disclosure. Network controller 410 may include centralized chassis thermal controller 420, machine learning model(s) 430, and display/user interface 440. Machine learning model(s) 430 may include one or more machine learning models trained and/or to be trained to perform any of the techniques of this disclosure. While shown outside of centralized chassis thermal controller 420, in some examples, machine learning model 430 may be part of centralized chassis thermal controller 420. Display/user interface 440 may be a display and/or user interface configured to enable a user, such as an administrator, to interact with network controller 410.

Network controller 410 may predict optimal ambient temperatures for each of computing devices 302, 304, and 306 using machine learning model(s) 430 that analyze historical data of external conditions. By identifying patterns between inlet and ambient temperature readings over time, network controller 410 may estimate a respective preferred or ideal ambient temperature for equipment operation for each of computing devices 302, 304, and 306.

For example, after estimating or learning the ambient temperature, based on inlet air temperature, network controller 410 may recommend an updated ambient temperature(s) to a network administrator. The network administrator may obtain the recommended updated ambient temperature for any of computing devices 302, 304, and 306 upon accessing the user interface of network controller 410. Upon approval by the network administrator, centralized chassis thermal controller 420 may adjust (e.g., reset or reconfigure) the ambient temperatures of any of computing devices 302, 304, and 306.

There may be one or more of temperature sensors 450A-450E. For example, temperature sensor 450A may be an external temperature sensor located outside data center 300. For example, temperature sensor 450A may be located outdoors. Temperature sensor 450B may be a temperature sensor located within data center 300, but external to the computing devices. For example, temperature sensor 450B may be mounted on rack 312. Temperature sensor 450C may be located at the inlet to a computing device, such as computing device 302A. Temperature sensors 450D and 450E may be located at different locations within a computing device, such as computing device 302A. It should be understood that any of, or any combination of, such temperature sensors may be present. Temperature sensors 450A-450E may be configured to sense an air temperature about the temperature sensor. Network controller 410 may use temperature readings from any of, or any combination of, temperature sensors 450A-450E to determine an inlet temperature for a particular network device, such as computing device 302A.

For example, centralized chassis thermal controller 420 may adjust the ambient temperatures for each of (or any of) computing devices 302, 304, and 306 by lowering them by 10°C to match a decrease in room temperature of approximately 10°C. For example, when cool air 320 drops by 10°C, centralized chassis thermal controller 420 may reduce the ambient temperatures for each of computing devices 302, 304, and 306 by 10°C. Since the inlet air temperature in data center 300 has also dropped by 10°C, and the same air circulates around racks 312, 314, and 316, the air temperature in the racks decreases accordingly. As a result, the ambient temperature of the computing devices 302, 304, and 306 is reduced by 10°C.

In some cases, if an administrator, via display/user interface 440, allows network controller 410 to configure the ambient temperature for computing devices 302, 304, and 306, network controller 410 may automatically configure the estimated optimal ambient temperature to computing devices 302, 304, and 306. As such, the techniques of this disclosure enable the network to achieve power savings by dynamically adjusting the ambient temperature of network devices by adapting to room temperature. For example, centralized chassis thermal controller 420 may learn room temperature 422 and, based on room temperature 422, set the optimal ambient temperature of computing devices 302, 304, and 306. As shown in the example of FIG. 4, the optimal ambient temperatures of different computing devices may be the same or different. It should be noted that the optimal ambient temperature of one computing device need not be the same as the optimal ambient temperature of another computing device.

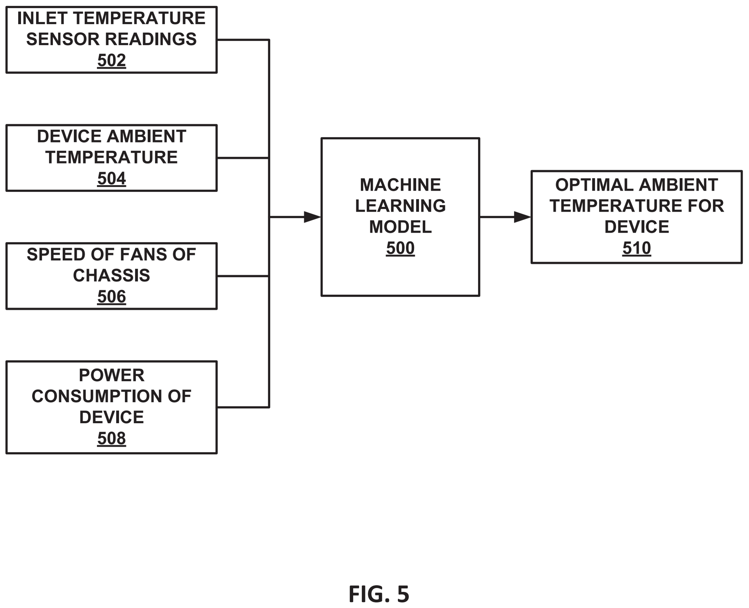

FIG. 5 is a block diagram illustrating inputs and output for a machine learning model according to one or more aspects of this disclosure. Trained machine learning model 500 may be an example of machine learning model(s) 400 of FIG. 4. Trained machine learning model 500 may obtain inputs including inlet temperature sensor readings 502, device ambient temperature 504, speed of fans or chassis (e.g., fan speed) 506, and power consumption of device 508. Trained machine learning model 500 may, based on the inputs, infer or predict and output optimal ambient temperature for device 510.

For example, trained machine learning model 500 may be deployed to infer or predict the optimal temperature for a device. When an administrator accesses a user interface of network controller 410 or centralized chassis thermal controller 420, the user interface may display the predicted optimal ambient temperature for one or more devices, up to every device of the network. When an administrator enables auto configuration of ambient temperature, network controller 410 or centralized chassis thermal controller 420 may configure the chassis ambient temperature in a database with predicted values.

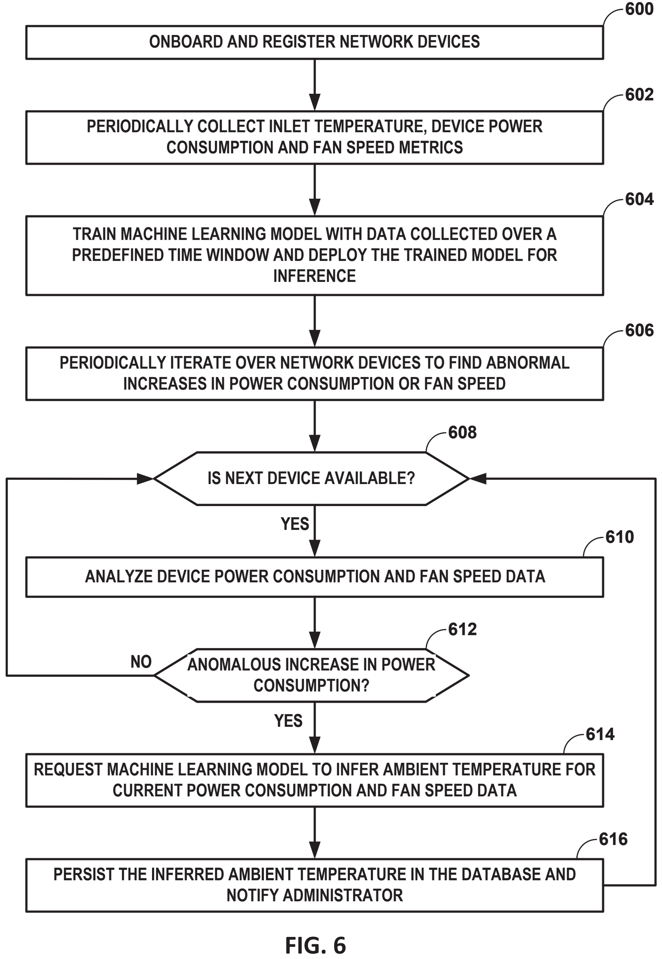

FIG. 6 is a flow diagram illustrating an example operation for generating recommended chassis ambient temperatures according to one or more aspects of this disclosure. Network controller 410 may onboard and register network devices (600). For example, network controller 410 may onboard and register each of computing devices 302, 304, and 306.

Network controller 410 may periodically collect inlet temperature, device power consumption, and fan speed metrics (602). For example, a telemetry collector of network controller 410 may collect inlet temperature sensor values, device power consumption metrics, and fan speed metrics from registered network devices, such as computing devices 302, 304, and 306.

Network controller 410 may train a machine learning model with data collected over a predefined time window and deploy a trained machine learning model for inference (604). For example, network controller 410 may train machine learning model 430 using data collected over a predefined period of time. The training data may include collected inlet temperature sensor values, device power consumption metrics, and fan speed metrics from registered network devices, such as computing devices 302, 304, and 306. Training data may also include device ambient temperatures (e.g., maximum operating temperatures) which may have been set by an administrator. Once machine learning model 430 is trained, network controller 410 may deploy machine learning model 430 such that machine learning model 430 may make inferences (e.g., estimations or predictions) based on input data. In some examples, the trained machine learning model 430 may be part of centralized chassis thermal controller 420.

Network controller 410 may periodically iterate over network devices to find abnormal increases in power consumption or fan speed (606). For example, network controller 410 may periodically collect new inlet temperature sensor values, device power consumption metrics, and fan speed metrics from registered network devices, such as computing devices 302, 304, and 306. Examples of the iteration are shown in boxes 608-616.

For example, network controller 410 may determine whether a next device is available (608). For example, network controller 410 may determine whether computing device 302A is available. If the next device (e.g., computing device 302A) is not available, network controller 410 may either wait for that device to be available, or skip the next device (e.g., computing device 302B) and proceed with a determination of whether that device (e.g., computing device 302B) is available.

If the next device (e.g., computing device 302A) is available (the "YES" path from box 608), network controller 410 may analyze device power consumption and fan speed data (610). For example, network controller 410 may analyze power consumption and fan speed data of computing device 302A. Network controller 410 may determine whether there is an anomalous increase in power consumption (612) for that device (e.g., computing device 302A). For example, network controller 410 may determine whether an increase in power consumption satisfies a threshold (e.g., is greater than or greater than or equal to a threshold). In some examples, the threshold may be based on power consumption for a plurality (e.g., all, all of a particular model, all within a particular rack, etc.) of the networking devices in a facility. In some examples, the threshold may be static or based on the past power consumption of a particular device (e.g., the next device). In some examples, network controller 410 may additionally, or alternatively, determine whether there is an anomalous increase in fan speed. For example, network controller 410 may determine whether an increase in fan speed a threshold (e.g., is greater than or greater than or equal to a threshold).

If an increase in power consumption is not anomalous (e.g., the "NO" path from box 612) or if there is no increase in power consumption, network controller 410 may check to see if the next device is available (608). For example, network controller 410 may check to see if computing device 302B is available. If the increase in power consumption is anomalous (the "YES" path from box 612), network controller 410 may request machine learning model 430 to infer an ambient temperature for current power consumption and fan speed data (614). For example, network controller 410 may input a current power consumption and fan speed of computing device 302A into machine learning model 430 and machine learning model 430 may infer (e.g., estimate or predict) an optimal ambient temperature (e.g., maximum operating temperature) for that network device.

Network controller 410 may persist the inferred ambient temperature in the database and notify an administrator (616). For example, network controller 410 may change an input, programmed, or configured maximum operating temperature in a database of network controller 410 (or accessible by network controller 410) to include the inferred ambient temperature. Network controller 410 may also notify an administrator of the change, for example, via a display or message. In some examples, network controller 410 may output, to an output device, the inferred ambient temperature as a recommended chassis ambient temperature for computing device 302A. In some examples, network controller 410 may configure computing device 302A with the inferred ambient temperature as a maximum chassis ambient temperature or a target chassis ambient temperature.

Ambient temperature-based power estimation using machine learning is now discussed.

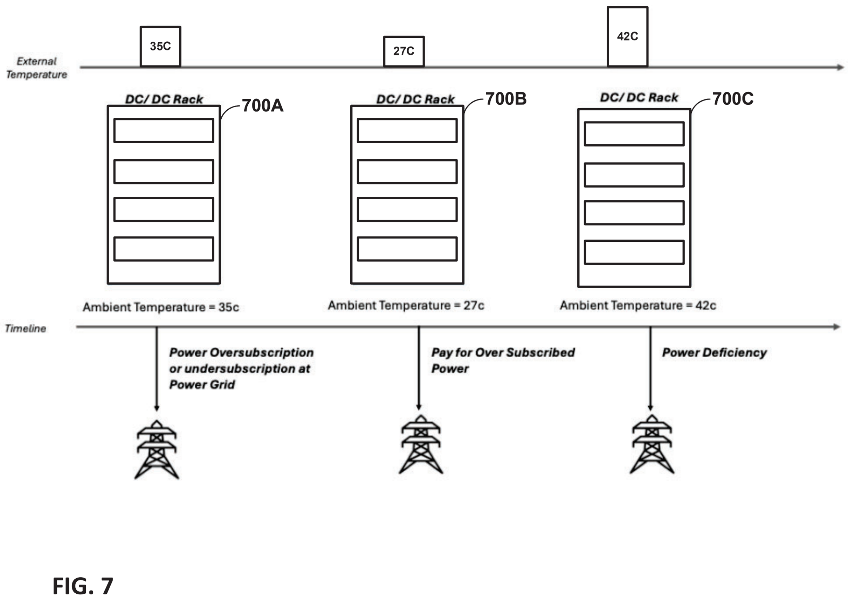

FIG. 7 is a conceptual diagram illustrating example power usage of a rack of network devices over time as related to ambient temperature. Rack 700 is shown at different times (labeled as 700A-700C). For example, rack 700 at time A is labeled rack 700A, rack 700 at time B is labeled rack 700B, and rack 700 at time C is labeled rack 700C. Rack 700 may be an example of any of racks 312, 314, or 316 of FIGS. 3-4.

Because the power consumption of network devices and the overall network is influenced by ambient temperature, network administrators often struggle to allocate the appropriate amount of power without knowing the power requirements associated with different ambient settings of the network devices within a data center. Typically, a network administrator may rely on external weather conditions to determine an appropriate ambient temperature for each network device in a network configuration. However, once the network administrator establishes such an ambient temperature value, the network administrator may remain uncertain about how this configuration will impact power consumption. This uncertainty can lead to either over-subscribing or under-subscribing power at the power grids, resulting in wasted energy and increased costs or, conversely, power shortages.

For example, the power utilized by an ambient temperature of 35 degrees at a time A when the external temperature is also 35 degrees may be equal to the amount of power allocated from power subscription(s) for operating the fans of the network devices in rack700A. At a time B, the external temperature may be 27 degrees. If the ambient temperatures of the network devices in rack 700B are also 27 degrees, then there may be an oversubscribed situation for the power allocated for operating the fans of the network devices in rack 700B, such that more power is being purchased than needed to cool the network devices in rack 700B. At a time C, the external temperature may be 42 degrees. If the ambient temperatures of the network devices in rack 700B are also 42 degrees, then there may be an undersubscribed situation for power allocated for operating the fans of the network devices in rack 700C, such that there is a power deficiency as less power is being purchased than needed to cool the network devices in rack 700C.

The techniques of this disclosure include utilizing machine learning techniques to analyze the power changes associated with various ambient temperature values. The techniques may leverage historical data on ambient temperature, power usage, and network traffic load metrics from devices to train one or more machine learning models. These trained machine learning model(s) may enable accurate prediction of power requirements for network devices and the network under different ambient temperature configurations. The technique of this disclosure may be integrated into a network controller (e.g., network controller 410 of FIG. 4) as a power estimation tool. For example, when a network administrator enables these techniques, the network administrator may input, via a user interface of network controller 410, an ambient temperature, and network controller 410 may estimate and display, via the user interface, the estimated power requirements in relation to the current traffic load, based on the ambient temperature.

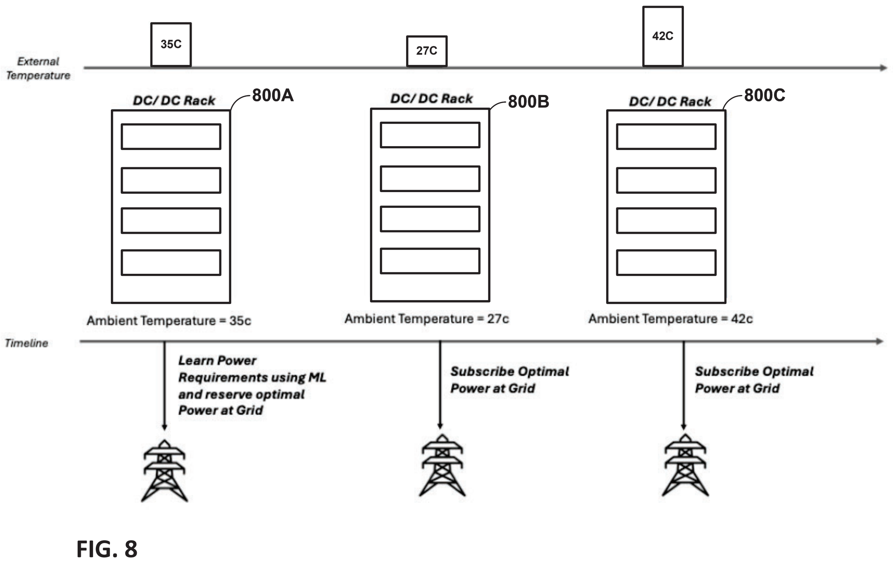

FIG. 8 is a conceptual diagram illustrating example power usage of a rack of network devices over time as related to ambient temperature according to one or more aspects of this disclosure. Rack 800 is shown at different times (labeled as 800A-800C). For example, rack 800 at time A is labeled rack 800A, rack 800 at time B is labeled rack 800B, and rack 800 at time C is labeled rack 800C. Rack 800 may be an example of any of racks 312, 314, or 316 of FIGS. 3-4.

In the example of FIG. 8, a machine learning model(s) may learn the power requirements for rack 800 at various times. In such a case, a network administrator or network controller 410 (FIG. 4) may reserve the predicted optimal amount of power from the power grid, avoiding oversubscriptions and undersubscriptions. This may reduce operating costs and save power. For example, network controller 410 may execute a machine learning model(s) to determine a predicted optimal power consumption at various times of day, days of the week, etc. In such an example, the network administrator or network controller 410 can reserve the appropriate predicted amount of power for the times A, B, and C, such that the power usage of rack 800A, rack 800B, and rack 800C are approximately equal to the power being consumed.

For example, the network administrator may input various ambient temperature values into the power estimation tool (e.g., of network controller 410) to assess potential power variations before committing to a subscription with the power grid. Doing so allows the network administrator to determine the optimal power needed for the network at the selected ambient temperature. Once power contracts are signed, the network administrator can proceed with configuring the desired or correct ambient temperature for the network and/or network devices. In some examples, if an administrator allows network controller 410 to configure the ambient temperature for the network devices, network controller 410 may automatically configure the estimated optimal ambient temperature to the network devices (e.g., computing devices 302A-302C, 304A-304C, and 306A-306C).

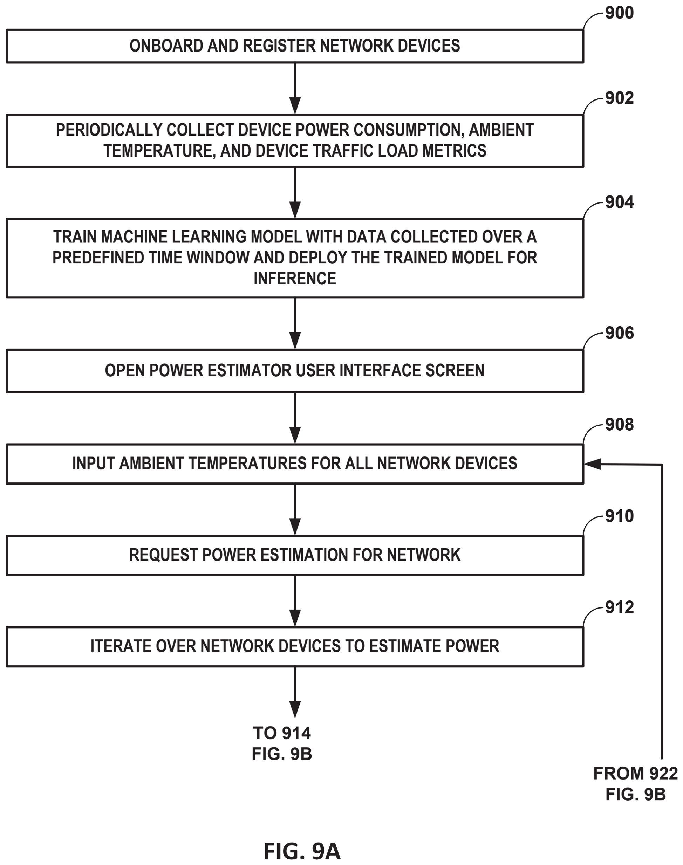

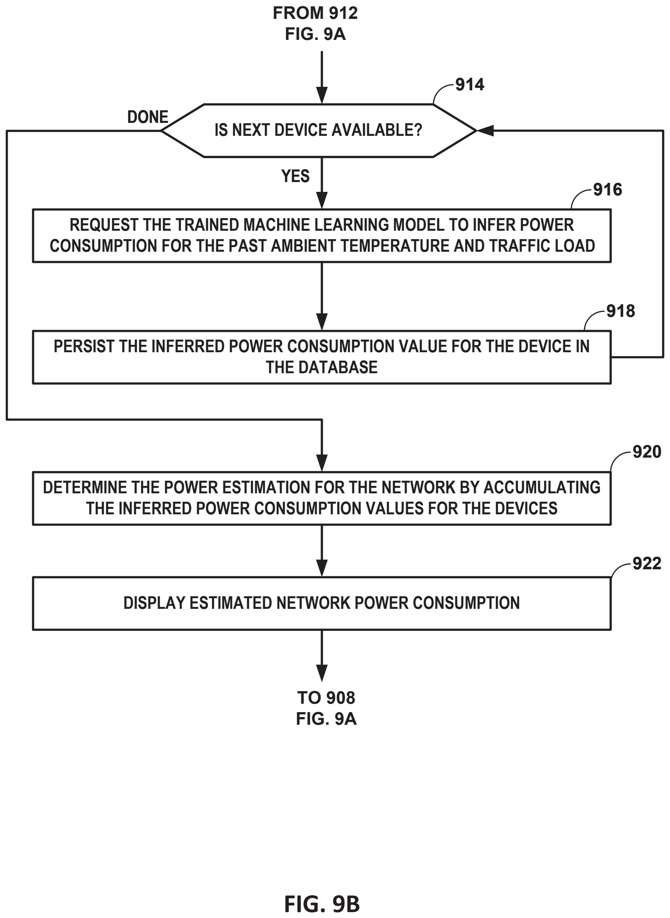

FIGS. 9A-9B are flow diagrams illustrating an example operation for estimating ambient temperature-based power consumption using machine learning techniques according to one or more aspects of this disclosure. Referring to FIG. 9A, network controller 410 may onboard and register network devices (900). For example, network controller 410 may onboard and register each of the network devices in rack 700. Such network devices may include computing devices, such as computing devices 302, 304, and/or 306.

Network controller 410 may periodically collect device power consumption, ambient temperature, and device traffic load metrics (902). For example, a telemetry collector of network controller 410 may collect device power consumption, ambient temperature, and device traffic load metrics from registered network devices.

Network controller 410 may train a machine learning model with data collected over a predefined time window and deploy a trained machine learning model for inference (904). For example, network controller 410 may train machine learning model 430 using data collected over a predefined period of time. The training data may include collected device power consumption, ambient temperature, and device traffic load metrics from registered network devices. Training data may also include device ambient temperatures (e.g., maximum operating temperatures) which may have been set by an administrator. Once machine learning model 430 is trained, network controller 410 may deploy machine learning model 430 such that machine learning model 430 may make inferences (e.g., estimations or predictions) based on input data. In some examples, the trained machine learning model 430 may be part of centralized chassis thermal controller 420.

An administrator may open a network power estimator user interface screen (906). For example, network controller 410 may include a user interface which may include a network power estimator screen accessible to an administrator. The administrator may input ambient temperatures for all network devices (908). For example, the administrator may, via the network power estimator user interface screen, input a respective ambient temperature for each network device. The administrator may request a power estimation for the network (910). For example, the administrator may click a button or a link to request the power estimation for the network.

Network controller 410 may iterate over network devices to estimate the power (912). Examples of the iteration are shown in boxes 914-918.

For example, network controller 410 may determine whether a next device is available (914). For example, network controller 410 may determine whether computing device 302A is available. If the next device is available (the "YES" path from box 914), network controller 410 may request the trained machine learning model to infer (e.g., estimate or predict) the power consumption for the past ambient temperature and traffic load (916). For example, network controller 410 may input the past ambient temperature and traffic load metrics of computing device 302A into machine learning model 430. Machine learning model 430 may infer a power consumption of computing device 302A. Network controller 410 may persist the inferred power consumption value for the device in the database (918). For example, network controller 410 may enter or change an input inferred power consumption value for computing device 302A in a database of network controller 410 (or accessible by network controller 410) to include the inferred power consumption value for the computing device 302A. In some examples, network controller 410 may also notify an administrator of inferred power consumption value for the device, for example, via a display or message. Network controller 410 may then determine whether a next device is available (914). For example, network controller 410 may determine whether computing device 302B is available. This may continue until all devices in the network have been checked.

If the next device is not available, network controller 410 may either wait for the next device to be available, or skip the next device and proceed with a determination of whether the next device after the next device is available. When each of the devices in the network has been checked (the "DONE" path from box 914), network controller 410 may determine the power estimation for the network by accumulating the inferred power consumption values for the devices (920). For example, network controller 410 may add the inferred power consumption values of all devices in a network to determine a power estimation for the network.

Network controller 410 may display the estimated network power consumption (922). For example, network controller 410 may control a display to display the estimated network power consumption, for example, to an administrator.

While the estimated network power consumption is described herein with respect to a network, it should be understood that these techniques may be used to determine power consumption of a portion of a network, such as a rack, a row of racks, a portion of a facility, etc.

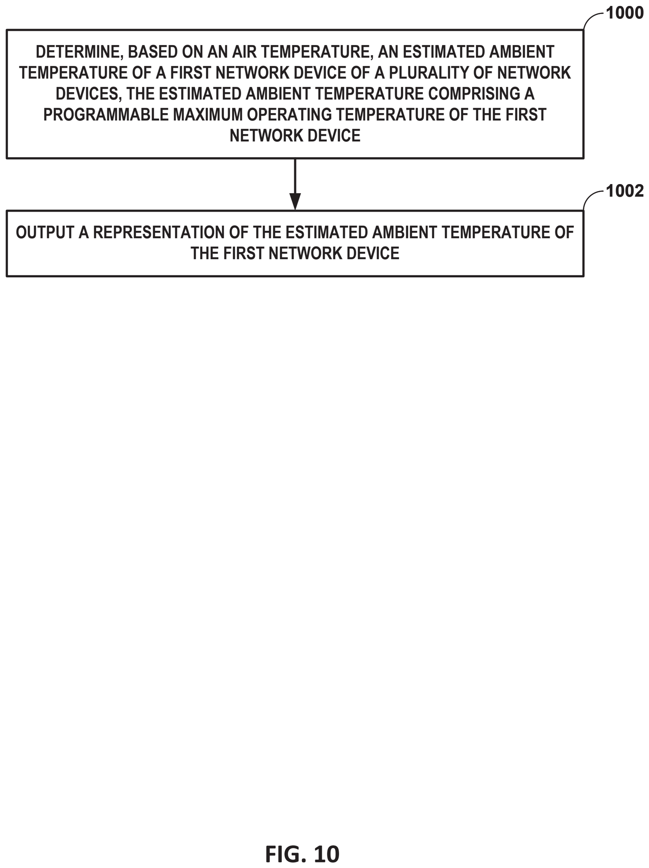

FIG. 10 is a flow diagram illustrating an example operation for estimating ambient temperature according to one or more aspects of this disclosure. Network controller 410 may determine, based on an air temperature, an estimated ambient temperature of a first network device of the plurality of network devices, the estimated ambient temperature comprising a programmable maximum operating temperature of the first network device (1000). For example, network controller 410 may determine an estimated ambient temperature for computing device 302A. The estimated ambient temperature may be a prediction or estimate of an optimal ambient temperature for that first network device.

Network controller 410 may output a representation of the estimated ambient temperature of the first network device (1002). For example, network controller 410 may output the representation of the estimated ambient temperature of computing device 302A to display/user interface 440 for viewing or other consumption by an administrator.

In some examples, the air temperature includes at least one of an inlet air temperature measured by a first temperature sensor located on or within the first network device, an average of a plurality of air temperatures measured by a plurality of temperature sensors located within the first network device, an inlet air temperature measured by a second temperature sensor located within a facility in which the first network device is located, or an external temperature measured by a third temperature sensor located outside the facility in which the first network device is located. In some examples, the air temperature may be based on any of, or any combination of the above. For example, the air temperature may be an average of two or more of an inlet air temperature measured by a temperature sensor located on or within the first network device, an average of a plurality of air temperatures measured by a plurality of temperature sensors located within the first network device, an inlet air temperature measured by a temperature sensor located within a facility in which the first network device is located, or an external temperature located outside the facility in which the first network device is located.

In some examples, the estimated ambient temperature of the network device includes a recommended maximum operating temperature of the network device. In some examples, to determine the estimated ambient temperature of the network device, network controller 410 may provide, to one or more machine learning models, at least one of the air temperature or a fan speed of the first network device to obtain the estimated ambient temperature of the network device. In some examples, one or more machine learning models 430 are trained on at least two of historical air temperature data, historical fan speed data, or configured ambient temperatures for the plurality of network devices. In some examples, the representation of the estimated ambient temperature of the first network device includes at least one of a visual representation of a recommended maximum operating temperature to be displayed via a user interface (e.g., display/user interface 440) or a command to the first network device to change a configured ambient temperature of the first network device to the estimated ambient temperature of the network device.

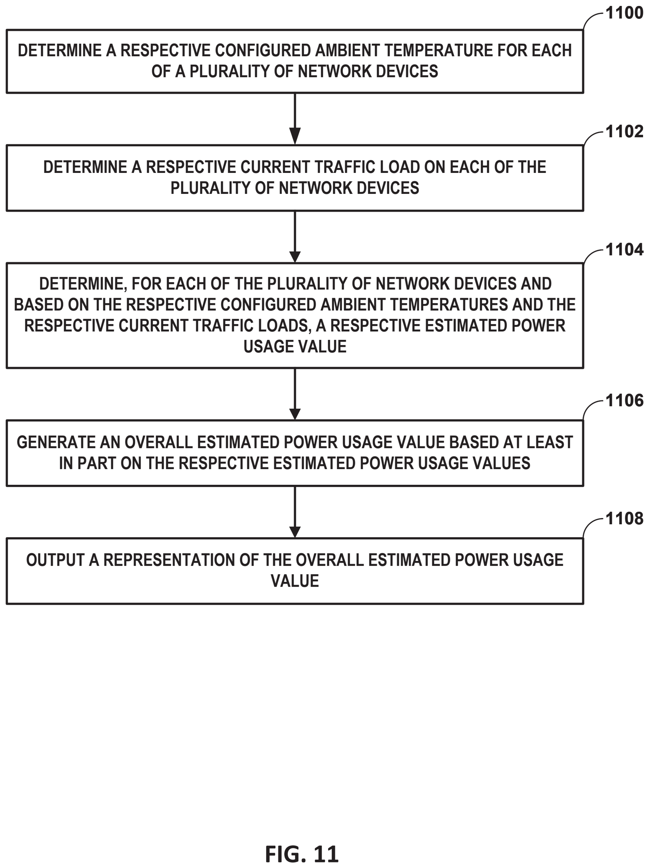

FIG. 11 is a flow diagram illustrating an example operation for estimating network power consumption techniques according to one or more aspects of this disclosure. Network controller 410 may determine a respective configured ambient temperature for each of a plurality of network devices (1100). For example, network controller 410 may determine configured ambient temperatures, which may be input by an administrator or previously populated by network controller 410, for each of computing devices 302, 304, and 306.

Network controller 410 may determine a respective current traffic load on each of the plurality of network devices (1102). For example, network controller 410 may determine traffic load for a given network device based on received telemetry data from that given network device.

Network controller 410 may determine, for each of the plurality of network devices and based on the respective configured ambient temperatures and the respective current traffic loads, a respective estimated power usage value (1104). For example, network controller 410 may execute machine learning model(s) 430 to determine the respective estimated power usage value for each of the plurality of network devices. Network controller 410 may use the respective configured ambient temperatures and the respective current traffic loads as inputs to machine learning model(s) 430.

Network controller 410 may generate an overall estimated power usage value based at least in part on the respective estimated power usage values (1106). For example, network controller may calculate a total of the respective estimated power usage values to determine the overall estimated power usage value.

Network controller 410 may output a representation of the overall estimated power usage value (1108). For example, network controller 410 may output the representation of the overall estimated power usage value to display/user interface 440 for viewing or other consumption by an administrator.

In some examples, a configured ambient temperature of a first network device of the plurality of network devices includes a configured maximum operating temperature of the first network device. In some examples, to determine the respective estimated power usage value, network controller 410 may provide, to one or more machine learning models, the respective configured ambient temperatures and the respective current traffic loads to obtain the respective estimated power usage value. In some examples, machine learning model(s) 430 are trained using historical ambient temperature data, historical traffic load data, and historical power usage data.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively, or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache). The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Additionally, or alternatively, a computer-readable medium can include transient media such as carrier waves and transmission media. Accordingly, the term "processor," as used herein may refer to any of the foregoing structure or any other structure suitable for implementation of the techniques described herein. In addition, in some aspects, functionality described in this disclosure may be provided within software modules or hardware modules.

Further examples of feature combinations taught by the present disclosure are set out in the following numbered clauses:
1. A computing device comprising:
   one or more processors; and
   one or more memories storing instructions, which, when executed by the one or more processors, cause the one or more processors to:
      determine a respective configured ambient temperature for each of a plurality of network devices;
      determine a respective current traffic load on each of the plurality of network devices;
      determine, for each of the plurality of network devices and based on the respective configured ambient temperatures and the respective current traffic loads, a respective estimated power usage value;
      generate an overall estimated power usage value based at least in part on the respective estimated power usage values; and
      output a representation of the overall estimated power usage value.
2. The computing device of clause 1, wherein a configured ambient temperature of a first network device of the plurality of network devices comprises a configured maximum operating temperature of the first network device.
3. The computing device of clause 1 or clause 2, wherein to determine the respective estimated power usage value, the instructions cause the computing device to provide, to one or more machine learning models, the respective configured ambient temperatures and the respective current traffic loads to obtain the respective estimated power usage value.
4. The computing device of clause 3, wherein the one or more machine learning models are trained using historical ambient temperature data, historical traffic load data, and historical power usage data.
5. The computing device of any preceding clause, wherein the instructions further cause the computing device to:
   determine, based on an air temperature, an estimated ambient temperature of a first network device of the plurality of network devices, the estimated ambient temperature comprising a programmable maximum operating temperature of the first network device; and
   output a representation of the estimated ambient temperature of the first network device.
6. The computing device of clause 5, wherein the air temperature comprises at least one of an inlet air temperature measured by a first temperature sensor located on or within the first network device, an average of a plurality of air temperatures measured by a plurality of temperature sensors located within the first network device, an inlet air temperature measured by a second temperature sensor located within a facility in which the first network device is located, or an external temperature measured by a third temperature sensor located outside the facility in which the first network device is located.
7. The computing device of clause 5 or clause 6, wherein the estimated ambient temperature of the network device comprises a recommended maximum operating temperature of the network device.
8. The computing device of any of clauses 5 to 7, wherein to determine the estimated ambient temperature of the network device, the instructions cause the computing device to provide, to one or more machine learning models, at least one of the air temperature or a fan speed of the first network device to obtain the estimated ambient temperature of the network device.
9. The computing device of clause 8, wherein the one or more machine learning models are trained on at least two of historical air temperature data, historical fan speed data, or configured ambient temperatures for the plurality of network devices.
10. The computing device of any of clauses 5 to 9, wherein the representation of the estimated ambient temperature of the first network device comprises at least one of a visual representation of a recommended maximum operating temperature to be displayed via a user interface or a command to the first network device to change a configured ambient temperature of the first network device to the estimated ambient temperature of the network device.
11. A method comprising:
   determining, by one or more processors, a respective configured ambient temperature for each of a plurality of network devices;
   determining, by the one or more processors, a respective current traffic load on each of the plurality of network devices;
   determining, by the one or more processors, for each of the plurality of network devices and based on the respective configured ambient temperatures and the respective current traffic loads, a respective estimated power usage value;
   generating, by the one or more processors, an overall estimated power usage value based at least in part on the respective estimated power usage values; and
   outputting, by the one or more processors and to an output device, a representation of the overall estimated power usage value.
12. The method of clause 11, wherein a configured ambient temperature of a first network device of the plurality of network devices comprises a configured maximum operating temperature of the first network device.
13. The method of clause 11 or clause 12, wherein determining the respective estimated power usage value comprises providing, to one or more machine learning models, the respective configured ambient temperatures and the respective current traffic loads to obtain the respective estimated power usage value.
14. The method of clause 13, wherein the one or more machine learning models are trained using historical ambient temperature data, historical traffic load data, and historical power usage data.
15. The method of any of clauses 11 to 14, further comprising:
   determining, based on an air temperature, an estimated ambient temperature of a first network device of the plurality of network devices, the estimated ambient temperature comprising a programmable maximum operating temperature of the first network device; and
   outputting a representation of the estimated ambient temperature of the first network device.
16. The method of clause 15, wherein the air temperature comprises at least one of an inlet air temperature measured by a first temperature sensor located on or within the first network device, an average of a plurality of air temperatures measured by a plurality of temperature sensors located within the first network device, an inlet air temperature measured by a second temperature sensor located within a facility in which the first network device is located, or an external temperature measured by a third temperature sensor located outside the facility in which the first network device is located.
17. The method of clause 15 or clause 16, wherein determining the estimated ambient temperature of the network device comprises providing, to one or more machine learning models, at least one of the air temperature or a fan speed of the first network device to obtain the estimated ambient temperature of the network device.
18. The method of clause 17, wherein the one or more machine learning models are trained on at least two of historical air temperature data, historical fan speed data, or configured ambient temperatures for the plurality of network devices.
19. The method of any of clauses 15 to 18, wherein the representation of the estimated ambient temperature of the first network device comprises at least one of a visual representation of a recommended maximum operating temperature to be displayed via a user interface or a command to the first network device to change a configured ambient temperature of the first network device to the estimated ambient temperature of the network device.
20. Computer-readable media, encoding instructions which, when executed, cause one or more processors to:
   determine a respective configured ambient temperature for each of a plurality of network devices;
   determine a respective current traffic load on each of the plurality of network devices;
   determine, for each of the plurality of network devices and based on the respective configured ambient temperatures and the respective current traffic loads, a respective estimated power usage value;
   generate an overall estimated power usage value based at least in part on the respective estimated power usage values; and
   output a representation of the overall estimated power usage value.

## Claims

1. A computing device comprising:
one or more processors; and
one or more memories storing instructions, which, when executed by the one or more processors, cause the one or more processors to:
determine a respective configured ambient temperature for each of a plurality of network devices;
determine a respective current traffic load on each of the plurality of network devices;
determine, for each of the plurality of network devices and based on the respective configured ambient temperatures and the respective current traffic loads, a respective estimated power usage value;
generate an overall estimated power usage value based at least in part on the respective estimated power usage values; and
output a representation of the overall estimated power usage value.

2. The computing device of claim 1, wherein a configured ambient temperature of a first network device of the plurality of network devices comprises a configured maximum operating temperature of the first network device.

3. The computing device of any of claims 1-2, wherein to determine the respective estimated power usage value, the instructions cause the computing device to provide, to one or more machine learning models, the respective configured ambient temperatures and the respective current traffic loads to obtain the respective estimated power usage value.

4. The computing device of claim 3, wherein the one or more machine learning models are trained using historical ambient temperature data, historical traffic load data, and historical power usage data.

5. The computing device of any of claims 1-4, wherein the instructions further cause the computing device to:
determine, based on an air temperature, an estimated ambient temperature of a first network device of the plurality of network devices, the estimated ambient temperature comprising a programmable maximum operating temperature of the first network device; and
output a representation of the estimated ambient temperature of the first network device.

6. The computing device of claim 5, wherein the air temperature comprises at least one of an inlet air temperature measured by a first temperature sensor located on or within the first network device, an average of a plurality of air temperatures measured by a plurality of temperature sensors located within the first network device, an inlet air temperature measured by a second temperature sensor located within a facility in which the first network device is located, or an external temperature measured by a third temperature sensor located outside the facility in which the first network device is located.

7. The computing device of any of claims 5-6, wherein the estimated ambient temperature of the network device comprises a recommended maximum operating temperature of the network device.

8. The computing device of any of claims 5-7, wherein to determine the estimated ambient temperature of the network device, the instructions cause the computing device to provide, to one or more machine learning models, at least one of the air temperature or a fan speed of the first network device to obtain the estimated ambient temperature of the network device.

9. The computing device of claim 8, wherein the one or more machine learning models are trained on at least two of historical air temperature data, historical fan speed data, or configured ambient temperatures for the plurality of network devices.

10. The computing device of any of claims 5-9, wherein the representation of the estimated ambient temperature of the first network device comprises at least one of a visual representation of a recommended maximum operating temperature to be displayed via a user interface or a command to the first network device to change a configured ambient temperature of the first network device to the estimated ambient temperature of the network device.

11. A method comprising:
determining, by one or more processors, a respective configured ambient temperature for each of a plurality of network devices;
determining, by the one or more processors, a respective current traffic load on each of the plurality of network devices;
determining, by the one or more processors, for each of the plurality of network devices and based on the respective configured ambient temperatures and the respective current traffic loads, a respective estimated power usage value;
generating, by the one or more processors, an overall estimated power usage value based at least in part on the respective estimated power usage values; and
outputting, by the one or more processors and to an output device, a representation of the overall estimated power usage value.

12. The method of claim 11, wherein a configured ambient temperature of a first network device of the plurality of network devices comprises a configured maximum operating temperature of the first network device.

13. The method of any of claims 11-12, wherein determining the respective estimated power usage value comprises providing, to one or more machine learning models, the respective configured ambient temperatures and the respective current traffic loads to obtain the respective estimated power usage value.

14. The method of claim 13, wherein the one or more machine learning models are trained using historical ambient temperature data, historical traffic load data, and historical power usage data.

15. A computer-readable storage medium encoded with instructions for causing one or more programmable processors to perform the method recited by any of claims 11-14.
